# EUROPEAN PATENT APPLICATION

(11) **EP 2 252 042 A2**
(43) Date of publication of application: **17.11.2010**
(21) Application number: 09716736.5
(22) Date of filing: 03.03.2009
(51) Int. Cl.: H04M 11/00, H04L 12/12

(54) **METHOD AND APPARATUS FOR SOFTWARE LIFECYCLE MANAGEMENT IN HOME NETWORK**

(30) Priority: 04.03.2008 US 33480 P; 19.08.2008 KR 20080081070; 12.01.2009 KR 20090002389
(71) Applicant: Samsung Electronics Co., Ltd., Suwon-si, Gyeonggi-do 442-742 (KR)
(72) Inventor: JUNG, Dong-Shin, Yongin-si Gyeonggi-do 446-712 (KR); LEE, Joo-Yeol, Yongin-si Gyeonggi-do 446-712 (KR); BHARADWAJ, Vedula Kiran, Bangalore 560093 Karnataka (IN); SREEKANTH, Siddatur Channakeshara, Bangalore 560 093 Karnataka (IN)
(74) Representative: Jenkins, Richard Gavin
(86) International application number: PCT/KR2009/001024
(87) International publication number: WO 2009/110719

(57) **Abstract**

[Problem]

A mechanism for the controller device to manage a software lifecycle of the controlled device according to certain conditions is required since a controller device needs to efficiently change the statues of software installed in a controlled device according to circumstances.

[Solution]

A controller device generates a message requesting to manage a software lifecycle according to a predetermined condition and transmits the generated message to the controlled device

## Description

### [Technical Field]

One or more embodiments relate to a home network, and more particularly, to a method of managing a software lifecycle, wherein the method is performed by a device of a home network.

### [Background Art]

Communication between home network devices is performed by a controller device controlling a controlled device to trigger a certain operation. In case of a universal plug and play (UPnP) based home network, a control point in a controller device controls a controlled device to perform a certain operation by calling the certain action defined in a service provided by the controlled device.

As more functions and types of devices operating in a home network are used and the number of interactions between the devices increases, software suitable to certain circumstances is required to be installed or used in the devices. For example, when a mobile device is to perform an operation that requires many resources in a home network but resources of the mobile device are insufficient to perform the operation, a PC that has relatively abundant resources performs the operation instead of the mobile device, and transmits a result of the operation to the mobile device.

When a controlled device needs certain software to perform an operation according to a request of a controller device, the controller device installs and executes the corresponding software in the controlled device. In some cases, the controller device updates or uninstalls the software. As such, the controller device needs to efficiently change the statues of software installed in the controlled device according to circumstances. In other words, a mechanism for the controller device to manage a software lifecycle of the controlled device according to certain conditions is required.

### [Description of Drawings]

FIG. 1 is a flowchart illustrating a process of a controller device communicating with a controlled device, according to an embodiment;
FIG. 2 is a flowchart illustrating a process of a controller device managing a software lifecycle of a controlled device, according to an embodiment;
FIG. 3 is a flowchart illustrating a process of a controlled device performing an operation requested by a controller device, according to an embodiment;
FIG. 4 illustrates structures of a controller device and a controlled device, according to an embodiment;
FIG. 5 illustrates condition information according to an embodiment,
FIG. 6 is a flowchart illustrating a process of a control point according to an embodiment;
FIG. 7 is a flowchart illustrating an extended processs of the controlled device described in FIG. 3;
FIG. 8 is a flowchart illustrating a process of providing a control point with state information of software installed in a controlled device, according to an embodiment;
FIG. 9 illustrates condition information expressed in XML format, according to an embodiment;
FIG. 10 illustrates condition information expressed in text format, according to an embodiment; and
FIG. 11 illustrates a signal flow graph illustrating a method for modifying a software state using predetermined condition.

### [Disclosure]

### [Technical Solution]

One or more embodiments include a mechanism that enables a controller device to effectively manage a software lifecycle of a controlled device in a home network.

### [Advantageous Effects]

According to the present invention, the controller device can manage the software lifecycle of the controlled device. Therefore, the controller device efficiently uses software according to characteristics thereof in the home network.

### [Best Mode]

One or more embodiments may include a method of controlling a controlled device, wherein the method is performed by a controller device in a home network, the method including: generating a message requesting to manage a software lifecycle according to a predetermined condition; and transmitting the generated message to the controlled device.

The message may request the controlled device to perform at least one of installing, executing, uninstalling, and updating corresponding software when the predetermined condition is satisfied.

The message may include location information of corresponding software required to download the software from the controller device or an external server of the home network.

The home network may use universal plug and play (UPnP) and the message may be a control message calling an action that manages the software lifecycle, wherein the control message may include information about the predetermined condition.

To achieve the above and/or other aspects, one or more embodiments may include a computer readable recording medium having recorded thereon a program for executing the above method.

To achieve the above and/or other aspects, one or more embodiments may include a controller device for controlling a controlled device in a home network, the controller device including: a message generator to generate a message requesting to manage a software lifecycle according to a predetermined condition; and a transmitter to transmit the generated message to the controlled device.

To achieve the above and/or other aspects, one or more embodiments may include a method of performing an operation requested by a controller device, wherein the method is performed by a controlled device in a home network, the method including: receiving a message requesting to manage a software lifecycle according to a predetermined condition from the controller device; and changing the software lifecycle according to the message based on whether the predetermined condition is satisfied.

The changing of the software lifecycle may perform at least one of installing, executing, uninstalling, and updating of corresponding software according to the message when the predetermined condition is satisfied.

The message may include location information of corresponding software used to download the software from the controller device or an external server of the home network.

The changing of the software lifecycle may include continuously monitoring whether the predetermined condition is satisfied.

To achieve the above and/or other aspects, one or more embodiments may include a computer readable recording medium having recorded thereon a program for executing the above method.

To achieve the above and/or other aspects, one or more embodiments may include a controlled device performing an operation requested by a controller device in a (home) network, the controlled device including: a message receiver to receive a message requesting to manage a software lifecycle according to a predetermined condition from the controller device; and a software manager to change the software lifecycle according to the message, based on whether the predetermined condition is satisfied.

### [Mode for Invention]

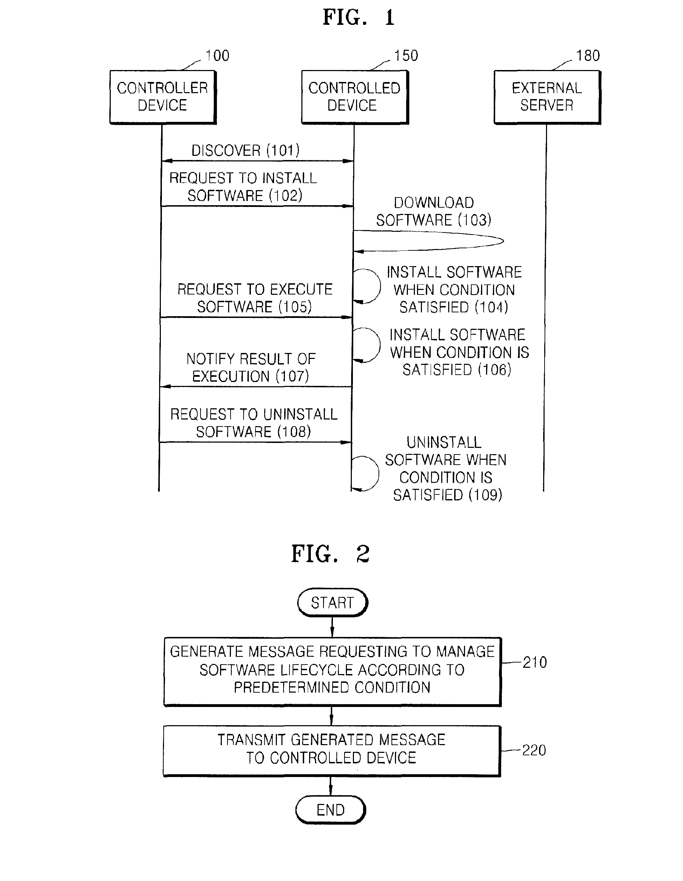

FIG. 1 is a flowchart illustrating a process performed by a controller device 100 communicating with a controlled device 150, according to an embodiment.

In operation 101, the controller device 100 connected to a home network recognizes the controlled device 101. Operation 101 corresponds to a discovery process, wherein a control point detects a universal plug and play (UPnP) device via a simple service discovery protocol (SSDP) in an UPnP, and a description process, wherein the control point detects capabilities of the UPnP device.

In operation 102, the controller device 100 transmits a message requesting to install certain software in the controlled device 150. Such a message may be a control message according to a simple object access protocol (SOAP) in the UPnP.

The message may include location information of software used to download the software. Downloadable software may be stored in the controller device 100 or in an external server 180 of the home network. According to an embodiment, the downloadable software is stored in the external server 180, and thus a uniform resource locator (URL) of a software file stored in the external server 180 is contained in the message.

Meanwhile, the message includes information about conditions that are referred to when installing the software (hereinafter, referred to as condition information). In other words, the controller device 100 requests the controlled device 150 to install the software only when a predetermined condition is satisfied. For example, the controller device 100 may request the controlled device 150 to install the software at 9 PM. The condition information may refer to a plurality of conditions.

The condition information may be included in the message requesting to install the software, or may be transmitted to the controlled device 150 via a separate message.

In operation 103, the controlled device 150 downloads the software from the external server 180.

In operation 104, the controlled device 150 installs the downloaded software when at least one condition provided by the controller device 100 in relation with software installation is satisfied.

In operation 105, the controller device 100 requests the controlled device 150 to execute the installed software.

Here, like in operation 102, the controller device 100 provides condition information about software execution to the controlled device 150. For example, the condition information may be about executing the software only when usable resources of the controlled device 150 are equal to or above 60% of the entire resources of the installed device 150.

In operation 106, the controlled device 150 executes the downloaded software when at least one condition provided by the controller device 100 in relation with software execution is satisfied.

In operation 107, the controlled device 150 notifies the controller device 100 of a result of executing the software.

In operation 108, the controller device 100 requests the controlled device 150 to uninstall the installed software.

Here, the controller device 100 provides condition information about uninstalling of the software to the controlled device 150 via a control message requesting to uninstall the software or via a separate message.

In operation 109, the controlled device 150 uninstalls the downloaded software when at least one condition provided by the controller device 100 in relation with uninstalling of the software is satisfied.

According to an embodiment, the controller device 100 manages the software lifecycle of the controlled device 150 according to a predetermined condition. Accordingly, the controller device 100 in the home network efficiently uses software according to characteristics thereof.

FIG. 2 is a flowchart illustrating a process performed by a controller device managing a software lifecycle of a controlled device, according to an embodiment.

In operation 210, the controller device generates a message requesting to manage the software lifecycle according to a predetermined condition.

Such message may include an identifier of software, location information of software, condition information, and etc. or any combination thereof. For example, the message may be a SOAP message calling a predetermined action of a service managing the software lifecycle of the controlled device in a UPnP network.

As described above, the message requesting to manage the software lifecycle and the condition information may be included in one message or in separate messages.

In operation 220, the controller device transmits the message generated in operation 210 to the controlled device.

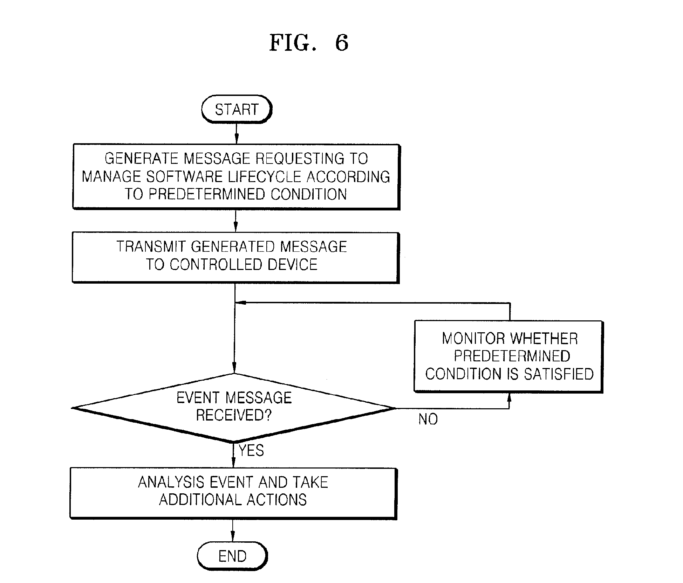

In accordance with FIG. 2 which is illustrating an interaction between a control point and a controlled device, FIG. 6 illustrates a process of a control point, wherein a control point receives information on state variation of the software installed by the control point via a event message and takes additional actions based on the event message.

That is, FIG. 6 is illustrating additional process after step 220 of FIG 2. After receiving the state information of the software, the control point takes additional actions such as, for example, when the state information indicates specific state of the installed software, installing additional software to be executed concurrently with the installed software, or notifying a user of the software state.

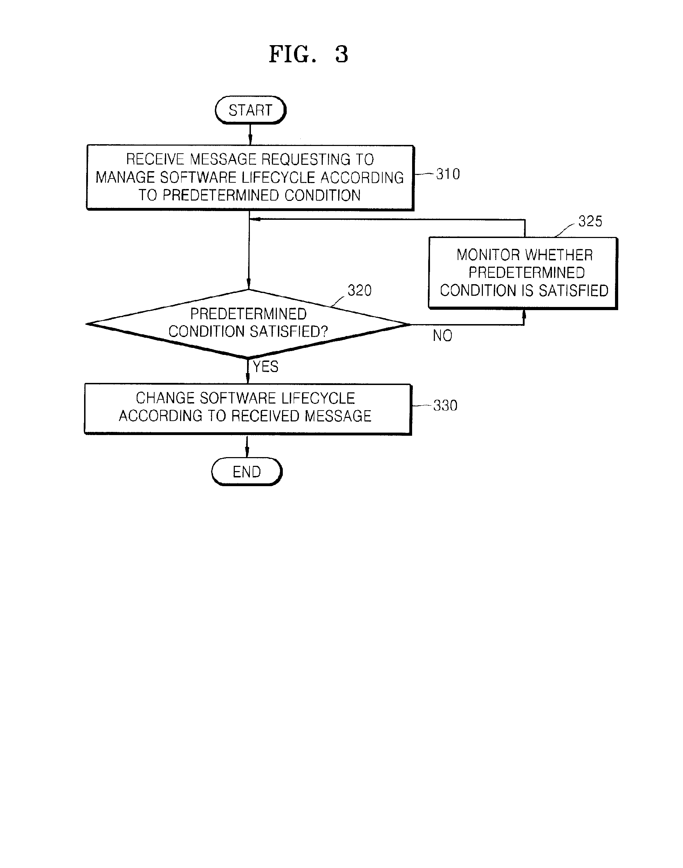

FIG. 3 is a flowchart illustrating a process performed by a controlled device performing an operation requested by a controller device, according to an embodiment.

In operation 310, the controlled device receives a message requesting to manage a predetermined software lifecycle according to a predetermined condition, for example, the controlled device receives a message requesting to execute system diagnosis software when available resources of the controlled device are equal to or above 60% of the controlled device between 11 PM to 6 AM.

In operation 320, the controlled device determined whether the predetermined condition is satisfied by referring to condition information provided by the controller device.

When the predetermined condition is not satisfied, the controlled device continuously monitors whether the predetermined condition is satisfied in operation 325. For example, the controller device requested to execute the system diagnosis software when the available resources of the controlled device are equal to or above 60% between 11 PM to 6 AM, but when the available resources of the controlled device are 50% at 11:30 PM, the controlled device continuously monitors whether the available resources of the controlled device reach 60%.

In operation 330, when the predetermined condition is satisfied, the controlled device changes the software lifecycle according to the received message. For example, the controlled device executes the requested software.

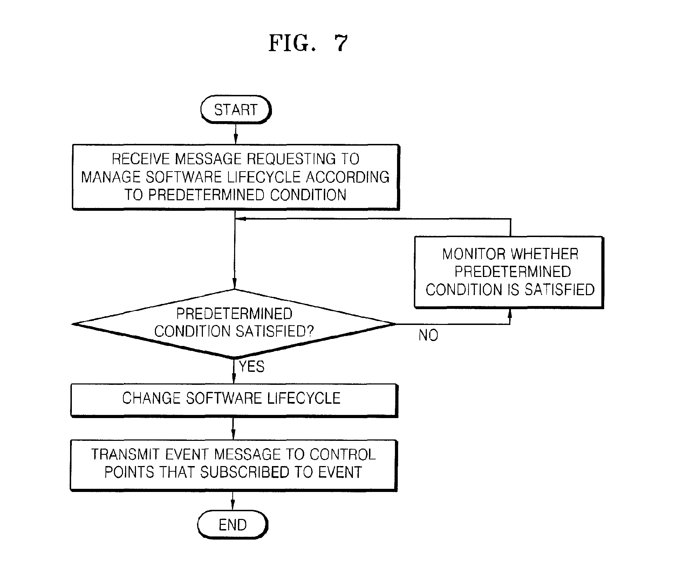

FIG. 7 is illustrating the extended operations of the controlled device described in FIG. 3.

As shown in FIG. 7, the controlled device transmits an event to control points that requested for the event notification. Through this operation, beside the control point which has installed the software in the controlled device, any other control point (for example, service provider etc.) that is interested in the state of the software is able to be provided with the information.

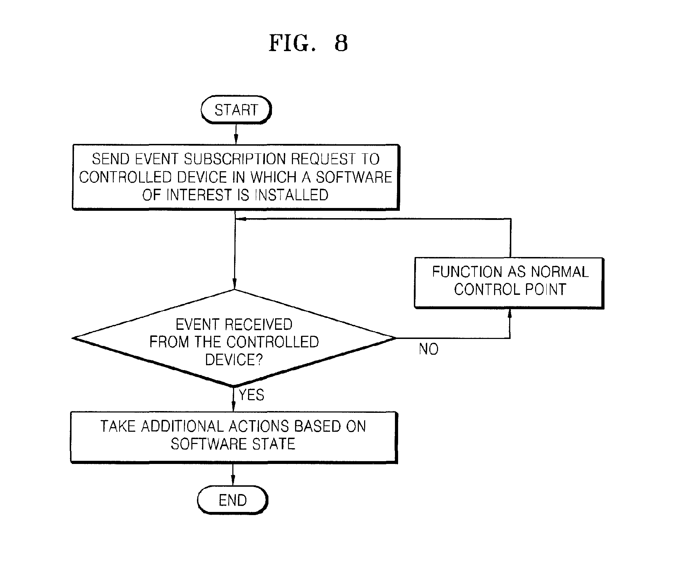

FIG. 8 is illustrating operations of providing a control point with the state information of the software installed in the controlled device.

The control point shown in FIG. 8 may be the third party control point other than a control point which in entitled to modify the state of the software by, for example, installing or executing the software. Therefore, the control point shown in FIG. 8 sends event subscription request to the controlled device to be kept updated about the state of specific software.

When the control point receives an event while functioning as normal control point, it takes additional actions based on the content of the event. For example, in a case the control point controls IGD, the control point may modify port mapping information of a specific port of a gateway when certain game software is installed in the controlled device.

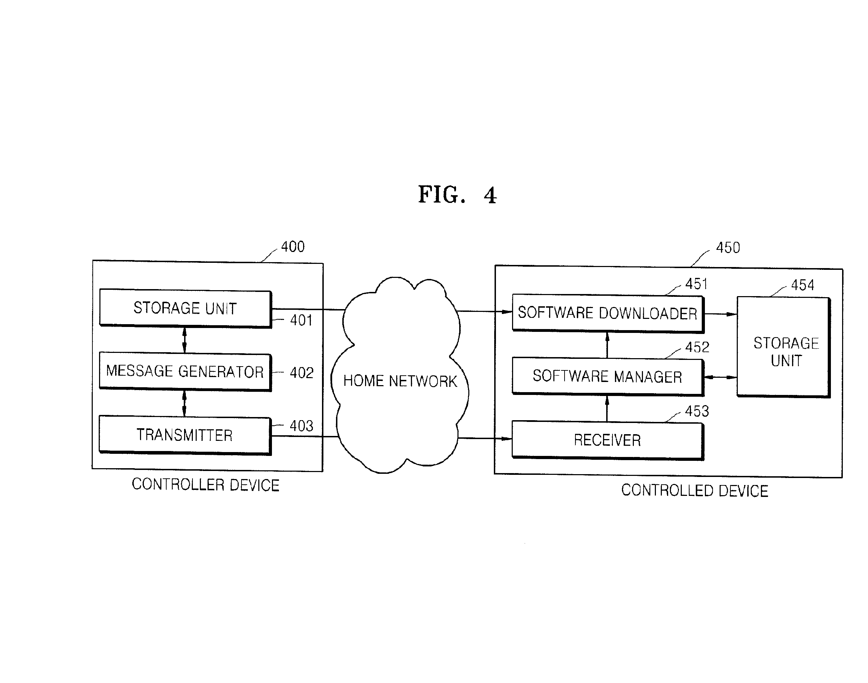

FIG. 4 is illustrates structures of a controller device 400 and a controlled device 450, according to an embodiment.

As illustrated in FIG. 4, the controller device 400 includes a storage unit 401, a message generator 402, and a transmitter 403.

The storage unit 401 to generate downloadable software.

The message generator 402 to generate a message requesting to manage a software lifecycle. The message may be a SOAP message according to UPnP.

The transmitter 403 to transmit the message generated by the message generator 402 to the controlled device 450.

Meanwhile, the controlled device 450 may include a software downloader 451, a software manager 452, a receiver 453, and a storage unit 454.

The software downloader 451 downloads software when the controller device 400 requests to install the corresponding software. In FIG. 4, the software is downloaded from the controller device 400, but may be downloaded from an external server (not shown) of a home network. Location information of the software used to download the software may be provided by the controller device 400.

The software manager 452 changes the software lifecycle according to a request of the controller device 400. Here, the software manager 452 monitors whether a condition is satisfied by referring to condition information provided by the controller device 400, and may change the software lifecycle only when the condition is satisfied.

For example, the software manager 452 installs, executes, uninstalls, or updates the corresponding software only when at least one condition provided by the controller device 400 is satisfied.

The receiver 453 receives the message requesting to manage the software lifecycle from the controller device 400.

The storage unit 454 stores various pieces of data related to the software.

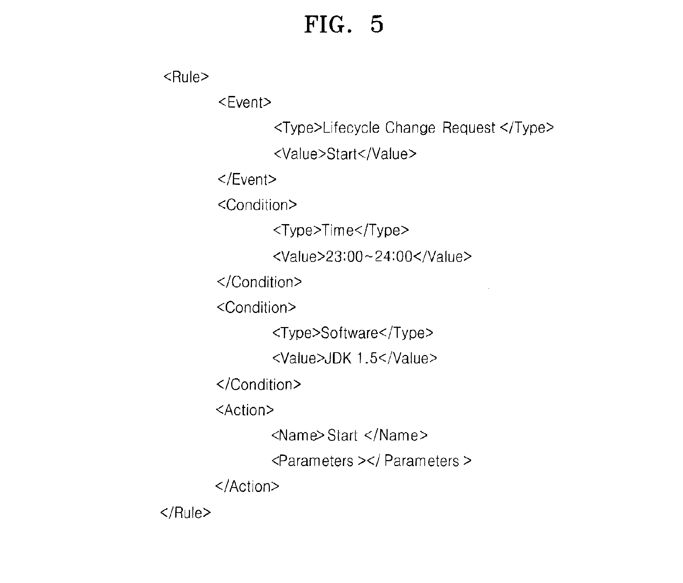

FIG. 5 illustrates condition information according to an embodiment.

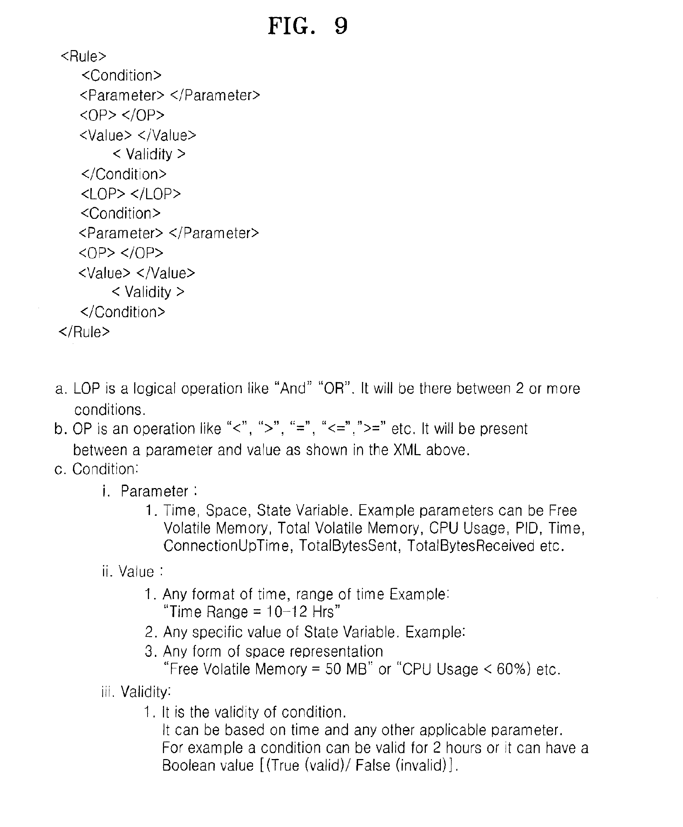

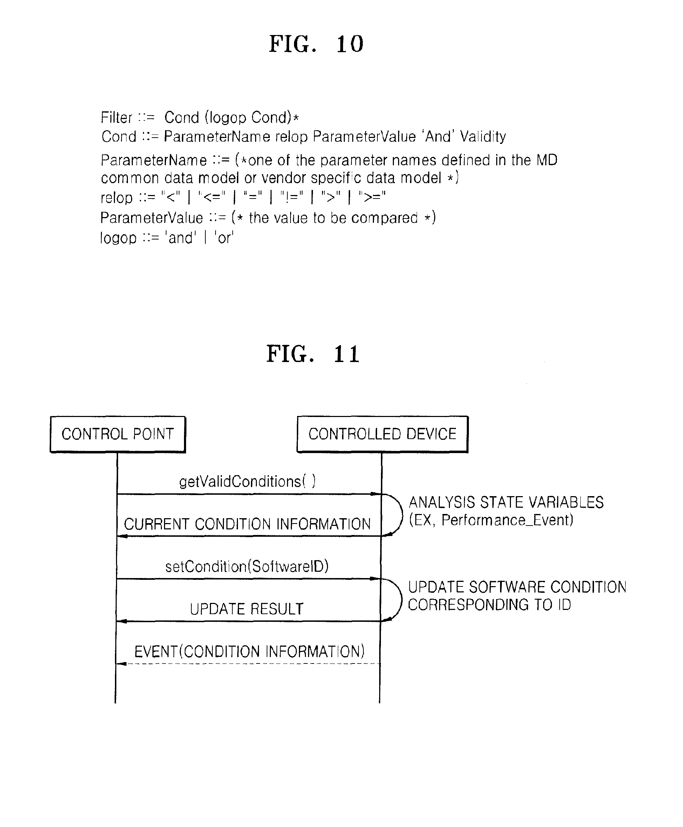

As illustrated in FIG. 5, condition information can be generated by using an extensible markup language (XML) or String, and such condition information may be inserted to a SOAP message of UPnP. As illustrated in FIG. 9, condition included in XML may comprise given Logical Operator. Alternatively, they can be expressed in String format as shown in FIG. 10. When condition comprising Logical Operator is used, a various combinations of And, Or, XOR etc. may be possible.

According to an embodiment shown in FIG. 5, a controller device installed predetermined software (JDK 1.5), and requests a controlled device to execute JDK1.5 software only between 23:00 and 24:00, for example.

FIG. 10 illustrates a method for expressing condition using Text format, not XML format. According to the embodiment shown in FIG. 10, Filter, Condition, Parameter Name and Operation(including Logical Operation), etc. are defined to make it possible to express condition in String format while carrying the same contents as XML format.

FIG. 11 illustrates a method for modifying a software state using predetermined condition described above. Specifically, information on condition of software is retrieved and condition is updated. Retrieving may be embodied using UPnP Action Invocation/Response. Also, Event message can be utilized to do so.

In addition, as shown in FIG. 1, control point may modify and/or delete condition by binding specific condition information to corresponding software.

In addition, other embodiments can also be implemented through computer readable code/instructions in/on a medium, e.g., a computer readable medium, to control at least one processing element to implement any above described embodiment. The medium can correspond to any medium/media permitting the storage and/or transmission of the computer readable code.

The computer readable code can be recorded/transferred on a medium in a variety of ways, with examples of the medium including recording media, such as magnetic storage media (e.g., ROM, floppy disks, hard disks, etc.) and optical recording media (e.g., CD-ROMs, or DVDs), and transmission media such as media carrying or including carrier waves, as well as elements of the Internet.

Although a few embodiments have been shown and described, it would be appreciated by those skilled in the art that changes may be made in these embodiments without departing from the principles and spirit of the invention, the scope of which is defined in the claims and their equivalents.

## Claims

1. A method of controlling a controlled device, wherein the method is performed by a controller device in a home network, the method comprising:
generating a message requesting to manage a software lifecycle according to a predetermined condition; and
transmitting the generated message to the controlled device.

2. The method of claim 1, wherein the message requests the controlled device to perform at least one of installing, executing, uninstalling, and updating corresponding software when the predetermined condition is satisfied.

3. The method of claim 1, wherein the message comprises location information of corresponding software required to download the software from the controller device or an external server of the home network.

4. The method of claim 1, wherein the home network uses universal plug and play (UPnP) and the message is a control message calling an action that manages the software lifecycle, wherein the control message comprises information about the predetermined condition.

5. A controller device for controlling a controlled device in a home network, the controller device comprising:
a message generator to generate a message requesting to manage a software lifecycle according to a predetermined condition; and
a transmitter to transmit the generated message to the controlled device.

6. The controller device of claim 5, wherein the message requests the controlled device to perform at least one of installing, executing, uninstalling, and updating corresponding software when the predetermined condition is satisfied.

7. The controller device of claim 5, wherein the message comprises location information of corresponding software used to download the software from the controller device or an external server of the home network.

8. The controller device of claim 5, wherein the home network uses universal plug and play (UPnP) and the message is a control message calling an action that manages the software lifecycle, wherein the control message comprises information about the predetermined condition.

9. A method of performing an operation requested by a controller device, wherein the method is performed by a controlled device in a home network, the method comprising:
receiving a message requesting to manage a software lifecycle according to a predetermined condition from the controller device; and
changing the software lifecycle according to the message based on whether the predetermined condition is satisfied.

10. The method of claim 9, wherein the changing of the software lifecycle performs at least one of installing, executing, uninstalling, and updating of corresponding software according to the message when the predetermined condition is satisfied.

11. The method of claim 9, wherein the message comprises location information of corresponding software required to download the software from the controller device or an external server of the home network.

12. The method of claim 9, wherein the changing of the software lifecycle comprises continuously monitoring whether the predetermined condition is satisfied.

13. The method of claim 9, wherein the home network uses on UPnP, and the message is a control message calling an action that manages the software lifecycle, wherein the control message comprises information about the predetermined condition.

14. A controlled device performing an operation requested by a controller device in a home network, the controlled device comprising:
a message receiver to receive a message requesting to manage a software lifecycle according to a predetermined condition from the controller device; and
a software manager to change the software lifecycle according to the message, based on whether the predetermined condition is satisfied.

15. The controlled device of claim 14, wherein the software manager performs at least one of installing, executing, uninstalling, and updating corresponding software according to the message, when the predetermined condition is satisfied.

16. The controlled device of claim 14, wherein the message comprises location information of corresponding software used to download the software from the controller device or an external server of the home network.

17. The controlled device of claim 14, wherein the software manager continuously monitors whether the predetermined condition is satisfied.

18. The controlled device of claim 14, wherein the home network uses UPnP, and the message is a control message calling an action that manages the software lifecycle, wherein the control message comprises information about the predetermined condition.

19. A computer readable recording medium having recorded thereon a program for executing the method of claim 1.
